# EUROPÄISCHE PATENTANMELDUNG

(11) **EP 2 434 603 A1**
(43) Veröffentlichungstag der Anmeldung: **28.03.2012**
(21) Anmeldenummer: 10178405.6
(22) Anmeldetag: 22.09.2010
(51) Int. Cl.: H02J 1/04, G06F 1/26

(54) **Verfahren zur Versorgung eines Verbrauchers mit einer Versorgungsspannung**

(71) Anmelder: Siemens Aktiengesellschaft, 80333 München (DE)
(72) Erfinder: Arndt, Jonas, 76137 Karlsruhe (DE)

(57) **Zusammenfassung**

Die Erfindung betrifft ein Verfahren zur Versorgung eines Verbrauchers (1) mit einer Versorgungsspannung.

Häufig werden in der Automatisierungstechnik Netzteile eingesetzt, die jeweils unterschiedliche Spannungen, z. B. 3,3V, 5V und 12V, zur Versorgung von verschiedenen Automatisierungskomponenten bereitstellen. Mechanische Verriegelungen verhindern, dass z. B. eine Komponente, die lediglich für eine Versorgungsspannung von 5V ausgelegt ist, versehentlich an einen 12V-Anschluss angeschlossen wird. Es werden Maßnahmen vorgeschlagen, wodurch eine Versorgung eines Verbrauchers mit einer für diesen Verbraucher geeigneten Spannung vereinfacht wird.

## Beschreibung

Die Erfindung betrifft ein Verfahren zur Versorgung eines Verbrauchers mit einer Versorgungsspannung gemäß dem Oberbegriff des Anspruchs 1. Ferner betrifft die Erfindung eine Anordnung zur Durchführung des Verfahrens sowie eine Identifikationsschnittstelle und ein Netzteil, welche bzw. welches für eine derartige Anordnung geeignet ist.

Häufig werden in der Automatisierungstechnik Netzteile eingesetzt, die jeweils unterschiedliche Spannungen, z. B. 3,3V-, 5V- und 12V-Spannungen, zur Versorgung von verschiedenen Automatisierungskomponenten bereitstellen. Mechanische Verriegelungen verhindern, dass z. B. eine Komponente, die lediglich für eine Versorgungsspannung von 5V ausgelegt ist, versehentlich an einen 12V-Anschluss angeschlossen wird.

Der vorliegenden Erfindung liegt die Aufgabe zugrunde, ein Verfahren der eingangs genannten Art anzugeben, welches eine Versorgung eines Verbrauchers mit einer für diesen Verbraucher geeigneten Spannung vereinfacht. Darüber hinaus ist eine Anordnung zur Durchführung des Verfahrens zu schaffen sowie ferner ein Netzteil und eine Identifikationsschnittstelle bereitzustellen, welches bzw. welche für einen Einsatz in einer derartigen Anordnung geeignet ist.

Im Hinblick auf das Verfahren wird diese Aufgabe durch die im kennzeichnenden Teil des Anspruchs 1, in Bezug auf die Anordnung durch die im kennzeichnenden Teil des Anspruchs 4, hinsichtlich der Identifikationsschnittstelle durch die im kennzeichnenden Teil des Anspruchs 8 und im Zusammenhang mit dem Netzteil durch die im kennzeichnenden Teil des Anspruchs 12 angegebenen Maßnahmen gelöst.

Vorteilhaft ist, dass auf mechanische Verriegelungen verzichtet werden kann, um zu verhindern, dass ein Verbraucher versehentlich an eine für diesen ungeeignete Spannungsversorgung eines Netzteils angeschlossen wird. Darüber hinaus ist lediglich ein Netzteil für verschiedene Spannungsklassen einsetzbar, wobei das Netzteil die jeweilige für den angeschlossenen Verbraucher bereitzustellende Versorgungsspannung automatisch erkennt und einspeist.

Das Netzteil speist eine zwischen dem Netzteil und dem Verbraucher geschaltete Identifikationsschnittstelle mit einer strombegrenzten für den Betrieb der Identifikationsschnittstelle erforderlichen Gleichspannung, wobei die Identifikationsschnittstelle einen im Wesentlichen gleichbleibend fließenden Ruhestrom zwischen Netzteil und Identifikationsschnittstelle derart verändert, dass die Identifikationsschnittstelle aus den Änderungen des Ruhestroms einen seriellen Datenstrom erzeugt. Dazu senkt ein Controller der Identifikationsschnittstelle über einen steuerbaren Schalter einen Strom in Zeitabständen auf einen Pegel des Ruhestroms ab, wobei ein dadurch erzeugtes Bitmuster, das eine für den Betrieb des Verbrauchers erforderliche Versorgungsspannung repräsentiert, dem Netzteil anzeigt, welche Versorgungsspannung dem Verbraucher einzuspeisen ist.

In einer Ausgestaltung der Erfindung ist vorgesehen, dem Netzteil den mit dem Bitmuster versehenen seriellen Datenstrom erst nach einem vorgegebenen Zeitintervall einzuprägen. Dadurch ist sichergestellt, dass nach dem Aufschalten der für den Betrieb der Identifikationsschnittstelle erforderlichen Betriebsspannung erst im eingeschwungenen Zustand die Identifikation angestoßen wird.

In einer weiteren Ausgestaltung der Erfindung zeigt die Identifikationsschnittstelle dem Netzteil den Beginn der Identifikations-Betriebsart an, wodurch Änderungen des Ruhestroms aufgrund von Störungen nach der Einspeisung der Interface-Betriebsspannung eine Identifikation nicht beeinflussen.

Der Beginn der Identifikations-Betriebsart kann z. B. durch ein weiteres Bitmuster des seriellen Datenstroms angezeigt werden.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
Figur 1 eine Anordnung mit einem Netzteil, einer Identifikationsschnittstelle und einer Eingangsschaltung eines Verbrauchers und
Figur 2 einen seriellen Datenstrom.

Zwischen einem mit 1 bezeichneten Verbraucher, z. B. einem Verbraucher in Form einer Peripherie-Baugruppe einer Automatisierungseinrichtung, und einem Netzteil 2 ist eine Identifikationsschnittstelle 3 geschaltet, welche dazu ausgebildet ist, dem Netzteil 2 eine für den Betrieb des Verbrauchers 1 erforderliche Versorgungsspannung anzuzeigen.

Das Netzteil 2 ist derart ausgestaltet, mehrere Versorgungsgleichspannungen bereitzustellen, beispielsweise eine 5V-, 12V- und 24V-Ausgangsspannung, die das Netzteil aus einer Eingangsspannung, z. B. aus einer 220V-Netzspannung, erzeugt. Ferner ist das Netzteil mit einer Auswerteeinheit 4 versehen, welche einen dem Netzteil 2 durch die Identifikationsschnittstelle 3 eingeprägten Strom auswertet. In der Auswerteeinheit 4 ist z. B. eine Tabelle hinterlegt, welche eine Zuordnung von jeweils einem Bitmuster zu einer für den Betrieb eines Verbrauchers erforderlichen Versorgungsspannung repräsentiert. Im vorliegenden Ausführungsbeispiel sind für die 5V-Versorgungsspannung ein erstes, für die 12V-Versorgungsspannung ein zweites und für die 24V-Versorgungsspannung ein drittes Bitmuster B1, B2, B3 zugeordnet.

Die Identifikationsschnittstelle 3, die vorzugsweise ein integraler Bestandteil des Verbrauchers 1 ist, weist einen Controller 5 sowie einen steuerbaren Schalter 6 und einen Widerstand 7 auf, wobei diese Komponenten - wie im Folgenden noch gezeigt wird - zur Erzeugung eines seriellen Datenstroms vorgesehen sind.

Es wird im Folgenden angenommen, dass das Netzteil 2 eingeschaltet wird, aufgrund dessen das Netzteil 2 der Identifikationsschnittstelle 3 eine für den Betrieb der Identifikationsschnittstelle 3 erforderliche Betriebsspannung von z. B. 3V einspeist. Ferner ist angenommen, dass der Verbraucher 1 eine 24V-Versorgungsspannung benötigt und ein steuerbarer Schalter 8 des Verbrauchers 1 erst bei einer anliegenden Spannung von ca. 20V schließt. Dadurch wird sichergestellt, dass während einer Identifikations-Betriebsart der Verbraucher 1 von dem Netzteil 2 und der Identifikationsschnittstelle 3 getrennt ist und der Verbraucher 1 eine Identifikation nicht störend beeinflusst.

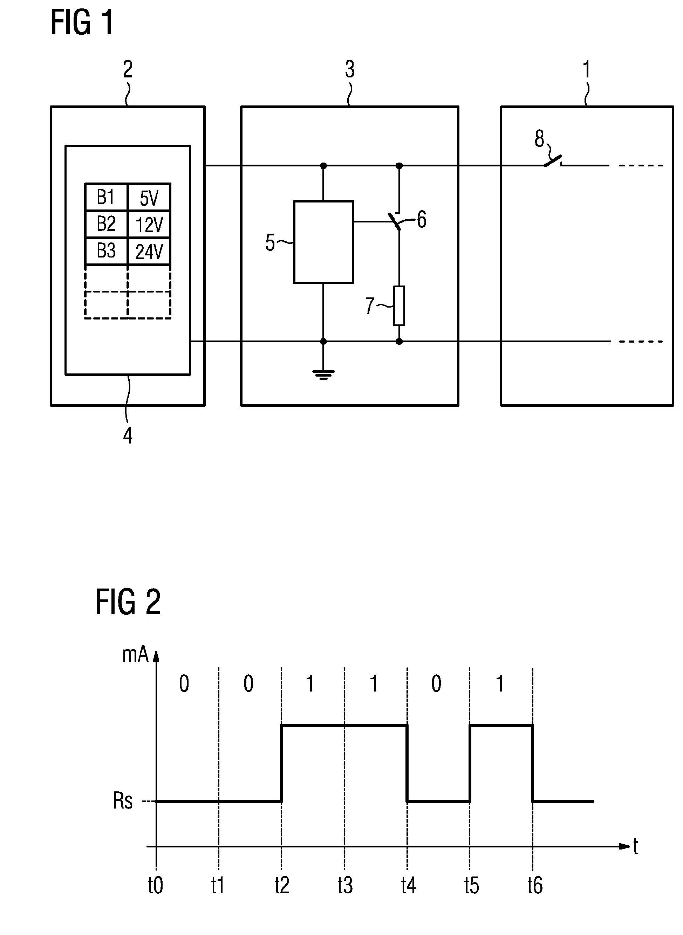

Aufgrund der eingespeisten Betriebsspannung fließt ein Ruhestrom zwischen dem Netzteil 2 und der Identifikationsschnittstelle 3 und die Schnittstelle 3 schaltet nach einem vorgegebenen Zeitintervall in die Identifikations-Betriebsart. Während dieser Betriebsart prägt die Schnittstelle 3 dem Netzteil 2 einen ein Bitmuster aufweisenden seriellen Datenstrom ein, wobei dieses Bitmuster dem Netzteil 2 anzeigt, dass für den Betrieb des Verbrauchers 1 eine 24V-Versorgungsspannung erforderlich ist. Im vorliegenden Ausführungsbeispiel ist vorgesehen, dass der Controller 5 den steuerbaren Schalter 6 während eines Zeitintervalls in regelmäßigen Zeitabständen derart öffnet und wieder schließt, dass aus einem Ruhestrom Rs ein serieller ein Bitmuster aufweisender Datenstrom erzeugt wird. Für den Fall, dass z. B. der Controller 5 während eines Zeitintervalls von 6 ms in regelmäßigen Zeitabständen von 1 ms den Schalter 6 zwischen einem Zeitpunkt t0 und t2 (Figur 2) sowie zwischen einem Zeitpunkt t4 und t5 öffnet, wird der Strom auf den Ruhestrom Rs abgesenkt. Dagegen schließt der Controller 5 zwischen einem Zeitpunkt t2 und t4 sowie zwischen einem Zeitpunkt t5 und t6 den Schalter 6 wieder und der Strom wird wiederum angehoben. Der Controller 5 erzeugt dadurch zusammen mit dem steuerbaren Schalter 6 einen seriellen Datenstrom, welcher ein "001101"-Bitmuster aufweist. Dieses Bitmuster erkennt die Auswerteeinheit 4 des Netzteils 2 und für den Fall, dass dieses eingeprägte Bitmuster dem Bitmuster B3 der Tabelle entspricht, weist dies darauf hin, dass der angeschlossene Verbraucher 1 eine 24V-Versorgungsspannung benötigt. Nach einem vorgegebenen Zeitintervall beendet die Identifikationsschnittstelle 3 die Identifikations-Betriebsart und das Netzteil 2 speist die dem Bitmuster B3 zugeordnete 24V-Spannung zur Versorgung des Verbrauchers 1 ein.

Den Beginn der Identifikations-Betriebsart zeigt die Identifikationsschnittstelle 3 dem Netzteil 2 an, indem dem Netzteil 2 ein Betriebsarten-Bitmuster eingeprägt wird. Dieses weist das Netzteil 2 darauf hin, dass in der beschriebenen Art und Weise das auf das Betriebsarten-Bitmuster folgende Bitmuster zum Erkennen der einzustellenden Versorgungsspannung für den Verbraucher 1 vorgesehen ist. Selbstverständlich ist das Betriebsarten-Bitmuster so gewählt, dass dieses sich von den Bitmustern B1, B2, B3 unterscheidet.

## Patentansprüche

1. Verfahren zur Versorgung eines Verbrauchers (1) mit einer Versorgungsspannung, **dadurch gekennzeichnet, dass**
- von dem Netzteil (2), welches zur Bereitstellung mehrerer Versorgungsspannungen vorgesehen ist, einer zwischen dem Netzteil (2) und dem Verbraucher (1) geschalteten Identifikationsschnittstelle (3) eine für den Betrieb der Identifikationsschnittstelle (3) erforderliche Betriebsspannung eingespeist wird,
- während einer Identifikations-Betriebsart durch die Identifikationsschnittstelle (3) ein serieller ein Bitmuster aufweisender Datenstrom erzeugt und dem Netzteil eingeprägt wird, wobei das Bitmuster die für den Betrieb des Verbrauchers (1) erforderliche Versorgungsspannung repräsentiert, und
- vom Netzteil (2) eine diesem Bitmuster zugeordnete Versorgungsspannung dem Verbraucher (1) eingespeist wird.

2. Verfahren nach Anspruch 1, **dadurch gekennzeichnet, dass** der Datenstrom nach einem vorgegebenen Zeitintervall eingeprägt wird.

3. Verfahren nach Anspruch 1 oder 2, **dadurch gekennzeichnet, dass** durch die Identifikationsschnittstelle (3) dem Netzteil (2) der Beginn der Identifikations-Betriebsart angezeigt wird.

4. Anordnung mit einem Verbraucher (1) und einem Netzteil (2) zur Versorgung eines Verbrauchers mit einer Versorgungsspannung, **dadurch gekennzeichnet, dass**
- eine zwischen dem Netzteil (2) und dem Verbraucher (1) geschaltete Identifikationsschnittstelle (3) vorgesehen ist,
- das Netzteil (2), welches zur Bereitstellung mehrerer Versorgungsspannungen vorgesehen ist, ausgebildet ist, der Identifikationsschnittstelle (3) eine für den Betrieb der Identifikationsschnittstelle (3) erforderliche Betriebsspannung einzuspeisen,
- die Identifikationsschnittstelle (3) ausgebildet ist, während einer Identifikations-Betriebsart einen ein Bitmuster aufweisenden seriellen Datenstrom zu erzeugen und dem Netzteil (2) einzuprägen, wobei das Bitmuster eine für den Betrieb des Verbrauchers (1) erforderliche Versorgungsspannung repräsentiert,
- das Netzteil (2) ausgebildet ist, aufgrund des Bitmusters zu erkennen, welche Versorgungsspannung dem Verbraucher (1) einzuspeisen ist, und diese Versorgungsspannung dem Verbraucher (1) einspeist.

5. Anordnung nach Anspruch 4, **dadurch gekennzeichnet, dass** die Identifikationsschnittstelle (3) einen Controller (5) aufweist, welcher nach einem vorgegebenen Zeitintervall den seriellen Datenstrom erzeugt.

6. Anordnung nach Anspruch 4 oder 5, **dadurch gekennzeichnet, dass** die Identifikationsschnittstelle (3) ausgebildet ist, dem Netzteil (2) den Beginn der Identifikations-Betriebsart anzuzeigen.

7. Anordnung nach einem der Ansprüche 4 bis 6, **dadurch gekennzeichnet, dass** die Identifikationsschnittstelle (3) in den Verbraucher (1) integriert ist.

8. Identifikationsschnittstelle für eine Anordnung nach einem der Ansprüche 5 bis 7, **dadurch gekennzeichnet, dass**
- die Identifikationsschnittstelle (3) Mittel zum Anschluss zwischen einem Netzteil (2) und einem Verbraucher (1) aufweist,
- die Identifikationsschnittstelle (3) Anschlüsse zum Einspeisen einer für den Betrieb der Identifikationsschnittstelle erforderlichen Betriebsspannung aufweist,
- die Identifikationsschnittstelle (3) ausgebildet ist, in eine Identifikations-Betriebsart zu schalten,
- die Identifikationsschnittstelle (3) ferner derart ausgebildet ist, während der Identifikations-Betriebsart einen ein Bitmuster aufweisenden Datenstrom zu erzeugen und dem Netzteil einzuprägen, wobei das Bitmuster eine für den Betrieb des Verbrauchers (1) erforderliche Versorgungsspannung repräsentiert.

9. Identifikationsschnittstelle nach Anspruch 8, **dadurch gekennzeichnet, dass** die Identifikationsschnittstelle (3) einen Controller (5) aufweist, welcher nach einem vorgegebenen Zeitintervall den seriellen Datenstrom erzeugt.

10. Identifikationsschnittstelle nach Anspruch 8 oder 9, **dadurch gekennzeichnet, dass** die Identifikationsschnittstelle (3) derart ausgebildet ist, dem Netzteil (2) den Beginn der Identifikations-Betriebsart anzuzeigen.

11. Identifikationsschnittstelle nach einem der Ansprüche 8 bis 10, **dadurch gekennzeichnet, dass** die Identifikationsschnittstelle (3) in einem Verbraucher (1) integriert ist.

12. Netzteil für eine Anordnung nach einem der Ansprüche 5 bis 7, wobei das Netzteil (2) zur Versorgung eines Verbrauchers (1) mit einer Versorgungsspannung vorgesehen ist, **dadurch gekennzeichnet, dass**
- das Netzteil (2) zur Bereitstellung mehrerer Versorgungsspannungen ausgebildet ist,
- das Netzteil (2) ausgebildet ist, einer zwischen dem Netzteil (2) und dem Verbraucher (1) geschalteten Identifikationsschnittstelle (3) eine für den Betrieb der Identifikationsschnittstelle (3) erforderliche Betriebsspannung einzuspeisen,
- das Netzteil (2) ausgebildet ist, einen durch die Identifikationsschnittstelle (3) erzeugten ein Bitmuster aufweisenden Datenstrom zu erfassen, wobei das Bitmuster eine für den Betrieb des Verbrauchers (1) erforderliche Versorgungsspannung repräsentiert,
- das Netzteil (2) ferner ausgebildet ist, während der Identifikations-Betriebsart aufgrund des Bitmusters zu erkennen, welche Versorgungsspannung dem Verbraucher einzuspeisen ist, wobei das Netzteil diese Versorgungsspannung dem Verbraucher einspeist.
